# EUROPEAN PATENT SPECIFICATION

(11) **EP 1 625 931 B1**
(45) Date of publication and mention of the grant of the patent: **24.09.2008**
(21) Application number: 04733627.6
(22) Date of filing: 18.05.2004
(51) Int. Cl.: B29D 30/26, B29D 30/30

(54) **METHOD OF PRODUCING PNEUMATIC RADIAL TIRE**
VERFAHREN ZUR HERSTELLUNG EINES LUFTRADIALREIFENS
PROCEDE DE PRODUCTION D'UN PNEU RADIAL

(30) Priority: 20.05.2003 JP 2003142494
(43) Date of publication of application: 15.02.2006
(73) Proprietor: THE YOKOHAMA RUBBER CO., LTD., Tokyo 105-8685 (JP)
(72) Inventor: HIGUCHI, Tadashi The Yokohama Rubber Co., Ltd., Kanagawa 2548601 (JP); HASHIMURA, Yoshiaki The Yokohama Rubber Co., Ltd., Kanagawa 2548601 (JP)
(74) Representative: HOFFMANN EITLE
(86) International application number: PCT/JP2004/006642
(87) International publication number: WO 2004/103688

(56) References cited:
- WO-A-98/54008
- GB-A- 1 183 606
- JP-A- 7 052 275
- JP-A- 10 081 108
- JP-A- 61 058 726
- JP-A- 2000 318 405
- JP-A- 2002 172 709
- JP-A- 2003 071 950
- US-A- 5 591 288
- US-A1- 2001 000 582
- US-A1- 2001 008 158

## Description

### TECHNICAL FIELD

The present invention relates to a method of producing a pneumatic radial tire, according to the preamble of claim 1 and to a method according to the preamble of claim 2.

Method of this kind are known from e.g. US-A-5 591 288 or JP-A-2002 172 709.

### BACKGROUD ART

A step of forming an unvulcanized tire in steps of producing a pneumatic radial tire generally includes: a step of forming a tire casing by winding a sheet material such as a carcass layer on a first shape-forming drum in a cylindrical shape, setting a bead core and a bead filler at both end portions of the outer periphery of the shape-forming drum, and winding a side rubber on both of the side parts (a first forming process); and a process of completing the unvulcanized tire by transferring the tire casing in the cylindrical shape to a second shape-forming drum, Furthermore expanding its diameter in the central part, and winding a belt layer and a tread rubber on the outer periphery (a second forming process).

Descriptions will be given of the above mentioned process of forming a tire casing (the first forming process) in further details. An inner liner is first wound on the shape-forming drum, and then a carcass layer is wound directly thereon, or the carcass layer is wound with a tie rubber layer interposed, the tie rubber layer playing a role of adhesiveness to the inner liner. However, when each sheet material is sequentially wound, the winding is performed by pressing each sheet with a pressing roller from the outside so as not to include air between the sheets. Nevertheless, if narrow adhesion sheets are inserted respectively on both end portions between the inner liner and the carcass layer or between the inner liner and the tie rubber layer for the purpose of, for example, reinforcing the left and right bead areas, the adhesion sheets cause level differences. Therefore, air tends to be included between the above mentioned sheet layers, especially in spots adjacent to the level differences when the sheet materials are pressed by the pressing roller as described above (see Patent Literature 1).

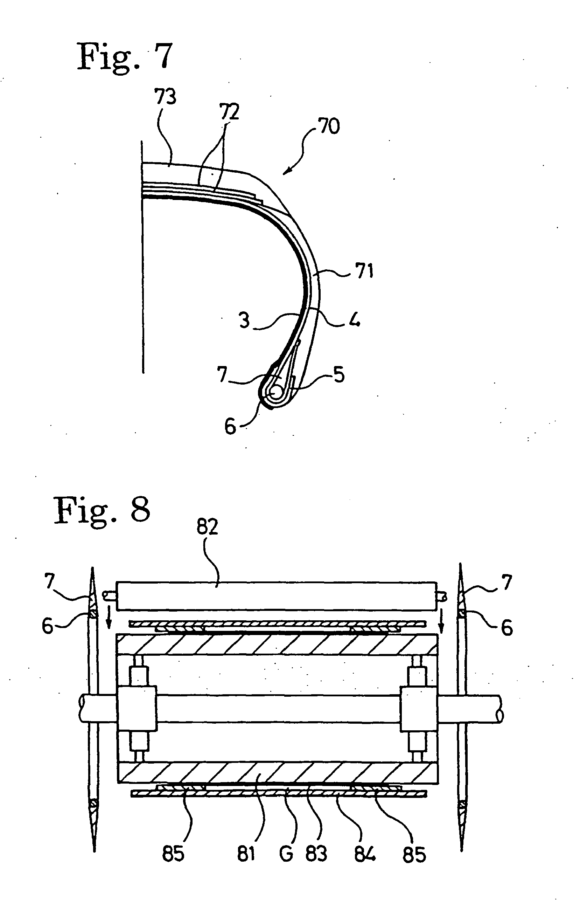

Fig. 8 shows a schematic view showing the above-mentioned process of forming the tire casing. When an inner liner 83 and a carcass layer 84 are sequentially wound on the outer periphery of a shape-forming drum 81, adhesion sheets 85, 85 are inserted in the inner surface of both the left and right end portions of the carcass layer 84. In this manner, by inserting the adhesion sheet 85, the thickness of this adhesion sheet 85 causes level difference. Therefore, a space is created in a region G sandwiched by the left and right adhesion sheets 85, 85 between the inner liner 83 and the carcass layer 84, and air trapped in this region G can not be removed even if the sheets are pressed by a pressing roller 82 from the outside. In this manner, there has been a problem that a tendency to cause air to be trapped appears remarkably when a thin resin film made of thermoplastic resin or a thermoplastic resin/elastomer composition is used instead of a rubber sheet as an inner liner for the purpose of the weight reduction of a tire.
Patent Literature 1: Japanese patent application *Kokai* publication No. 8-25509.

### DISCLOSURE OF THE INVENTION

An object of the present invention is to provide a method of producing a pneumatic radial tire to prevent air from being trapped in a tire casing in a process of forming a tire casing.

The above object, is achieved according to the invention by the method as defined in claim 1.

In this manner, according to the method of the present invention, since the belt-like grooves are formed in the outer periphery of the shape-forming drum at positions corresponding to the positions of the adhesion sheets, the level differences of the adhesion sheets are eliminated from the surface of the shape-forming drum by making the adhesion sheets stuck and sink in the belt-like grooves when the sheet materials are wound on the shape-forming drum while being pressed by the pressing roller. Hence, it is made possible not to include air between the sheets.

Moreover, the above object is achieved according to the invention by the method as defined in claim 2.

In this manner, since the elastic layer is coated on the outer periphery of the shape-forming drum, when the sheet materials are wound on the shape-forming drum while being pressed by the pressing roller, the level differences of the adhesion sheets are eliminated from the surface of the shape-forming drum by squeezing the adhesion sheets into the elastic layer. Thus, it is made possible not to include air between the sheets.

Particular embodiments of the invention are the subject of the respective dependent claims.

### BRIED DESCRIPTION OF THE DRAWINGS

Fig. 1 is an explanatory view exemplifying a process of forming a tire casing in a tire production method of the present invention.
Fig. 2 is an explanatory view showing the final stage of the process of forming the tire casing shown in Fig. 1.
Figs. 3A and 3B are cross-sectional views exemplifying a pressing roller used in the process of forming the tire casing shown in Fig. 1 as well as its operation.
Figs. 4A and 4B are cross-sectional views exemplifying another aspect of a pressing roller as well as its operation.
Fig. 5 is an explanatory view exemplifying another embodiment of a process of forming a tire casing in a tire production method of the present invention.
Fig. 6 is an explanatory view exemplifying still another embodiment of a process of forming a tire casing in a tire production method of the present invention.
Fig. 7 is a half sectional view exemplifying an unvulcanized tire formed by use of the present invention.
Fig. 8 is an explanatory view showing a conventional process of forming a tire casing.

### BEST MODES FOR CARRYING OUT THE INVENTION

In the present invention, sheet materials used for forming a tire casing are at least an inner liner, a left and right pair of narrow adhesion sheets and a carcass layer. Furthermore, if needed, a tie rubber layer may be used in some cases.

Out of the above sheet materials, the carcass layer is a sheet material to form the frame of a pneumatic radial tire, and is configured by coating many carcass cords arranged in parallel to each other with an unvulcanized coat rubber. The carcass cord can be any of an organic fiber cord and a steel cord.

The inner liner is a sheet material to be provided in the innermost layer of a pneumatic tire as a seal layer, and an unvulcanized rubber sheet such as a butyl rubber, which has low air permeability, is used for the inner liner. In recent years, there are some cases where a film material made of thermoplastic resin or a thermoplastic resin/elastomer composition, which have air permeability resistance at the same level even if the film material is made thinner than a rubber material, is used for a sheet material for the inner liner for the purpose of the weight reduction of a tire. In terms of the thickness of the film material, a range from 0.02 to 1.1 mm is preferably used to balance weight reduction with a sealing ability. When this film material is used for the inner liner, a failure caused by trapped air tends to appear remarkably. Hence, the present invention can be applied most preferably.

The adhesion sheets are sheet materials which are inserted to reinforce mainly around bead areas. An unvulcanized rubber sheet or a sheet in which reinforcement fiber fabric is coated with an unvulcanized coat rubber is preferably used for the adhesion sheet.

The tie rubber layer is a sheet material used for adhesive reinforcement in a case where adhesiveness between the carcass layer and the inner liner is low. Therefore, an unvulcanized rubber sheet having excellent adhesiveness is used for the tie rubber layer. Especially, when a film material made of thermoplastic or a thermoplastic/elastomer composition is used for the inner liner, it is effective to use the tie rubber layer in order to reinforce adhesiveness to the carcass layer. Furthermore, an adhesive layer may be added to the foregoing film material to further increase adhesiveness.

In the present invention, as winding methods to form a cylinder-shaped tire casing on a shape-forming drum by using the above-mentioned sheet materials, there are the following types A to C in response to the winding order and combination of these sheet materials.
A: (1) inner liner / (2) adhesion sheets + carcass layer
B: (1) inner liner / (2) adhesion sheets + tie rubber layer / (3) carcass layer
C: (1) inner liner / (2) adhesion sheets + tie rubber layer + carcass layer

Here, "adhesion sheet + carcass layer" means to apply the left and right pair of adhesion sheets to the carcass layer in advance to integrate them before they are wound on a shape-forming drum. "Adhesion sheets + tie rubber layer" means to apply the left and right pair of adhesion sheets to the tie rubber layer in advance to integrate them before they are wound on the shape-forming drum. In addition, "adhesion sheets + tie rubber layer + carcass layer" means to apply the tie rubber layer to the carcass layer in advance to superimpose, and further apply the left and right pair of adhesion sheets to the tie rubber layer, thus integrating them. In this manner, the winding is performed on the shape-forming drum at the units (1) to (3) while the sheet materials are pressed by a pressing roller.

A drum where belt-like grooves are formed in the outer periphery at positions corresponding to the winding positions of the adhesion sheets is used as the shape-forming drum used in the present invention. In terms of the width of the belt-like groove, it is sufficient if the belt-like groove is wide enough to accommodate the adhesion sheet. In this manner, by forming belt-like grooves in the shape-forming drum, when the sheet materials are wound on the shape-forming drum in any one of the foregoing types A to C while being pressed by the pressing roller, the adhesion sheets are made to be fitted in the belt-like grooves. Hence, the level differences of the adhesion sheets are eliminated from the surface of the shape-forming drum. As a result, in the case of the winding method of the type A, it is made possible that air is not included between the inner liner and the carcass layer. Moreover, in the cases of the winding methods of the types B and C, it is made possible that air is not included between the inner liner and the tie rubber layer.

In terms of the depth of the above belt-like groove, it is preferable to be 0.3 to 1.5 times compared to the thickness of the adhesion sheet. Furthermore preferably, it is advantageous to be 0.7 to 1.3 times. If the depth of the belt-like groove is smaller than 0.3 times compared to the thickness of the adhesion sheet, it becomes harder to obtain the above-mentioned effect owing to the belt-like grooves. Moreover, if it is larger than 1.5 times, it is not preferable since level differences in depressed forms are created conversely.

In addition, a shape-forming drum having an elastic layer coated on its outer periphery may be used as the shape-forming drum used in the present invention. It is advantageous to use resin foam such as polyurethane for the elastic layer. In this manner, by coating the elastic layer on the outer periphery of the shape-forming drum, when the sheet materials are wound on the shape-forming drum while being pressed by the pressing roller, the adhesion sheets are squeezed into the elastic layer. Thus, the level differences of the adhesion sheets are eliminated from the surface of the shape-forming drum, and it is made possible not to include air between the sheets.

In terms of the thickness of the elastic layer, it is advantageous to be within a range from 0.5 to 5 times compared to the thickness of the adhesion sheet. If the thickness of the elastic layer is smaller than 0.5 times compared to the thickness of the adhesion sheet, it is difficult to eliminate the level differences of the adhesion sheets. In addition, if the thickness of the elastic layer becomes larger than 5 times compared to the thickness of the adhesion sheet, the winding of the sheet materials becomes unstable because of a decrease in rigidity of the surface of the shape-forming drum. Accordingly, it is not preferable.

The pressing roller to press the sheet materials to the shape-forming drum may be a straight-shaped roller having a flat and smooth outer surface. However, preferably, many hollow wheels are supported in parallel to each other on a supporting shaft, and also it is advantageous to use a roller in which each of these hollow wheels are configured to be displaceable independently in the radius direction of the supporting shaft. For example, it is possible to use rollers such as: a roller in which the many hollow wheels having heavy bobs are loosely fitted in parallel to be supported and each hollow wheel is configured to be displaceable independently in the diameter direction of the supporting shaft; or a roller where the many hollow wheels are loosely fitted in parallel in the axis direction to be supported on the bearing into which the supporting shaft fits and an elastic body such as a spring or resin foam including polyurethane are lain between the bearing and the hollow wheel to support the hollow wheel elastically.

In the pressing roller with the above configuration, a distance which the hollow wheels are displaceable in the radius direction in relation to the supporting shaft is not particularly limited. However, preferably, it is desired to make the distance 0.3 to 1.5 times compared to the thickness of the adhesion sheet. Moreover, it is advantageous for the hollow wheel to be made its width as small as 5 to 10 mm. In this manner, by making the width of the hollow wheel small, each hollow wheel presses the adhesion sheets in a small width unit. Hence, the adhesion sheets are made possible to be squeezed into the belt-like grooves and the elastic layer with high measurement precision. If the width of the hollow wheel is wider than 10 mm, it becomes difficult for the adhesion sheets to be uniformly squeezed into the belt-like grooves or the elastic layer. Furthermore, if the width of the hollow wheel is smaller than 5 mm, the local pressure applied by the hollow wheels becomes too large. Accordingly, the sheet materials may be deformed.

Hereinafter, with reference to embodiments shown in the drawings, descriptions will be given of the present invention.

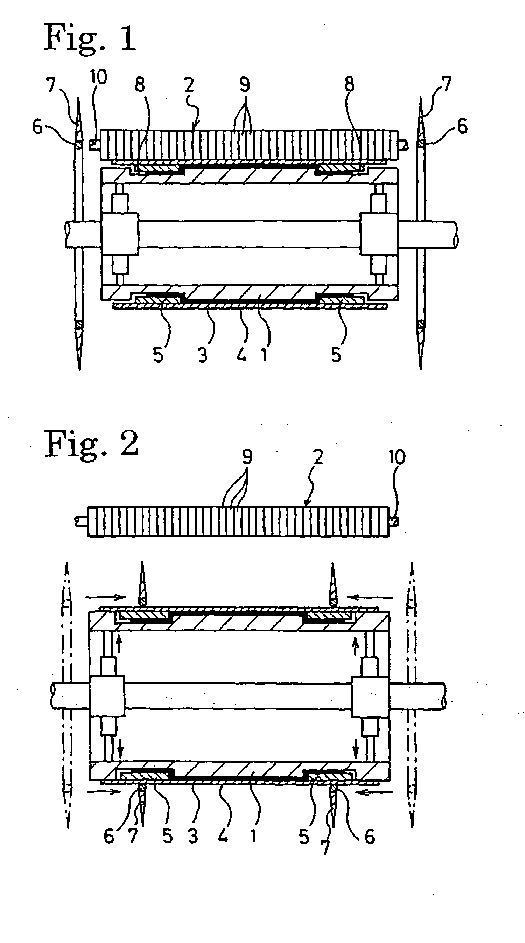

Fig. 1 exemplifies a process of forming a cylindrical-shaped tire casing in the present invention. Out of the above-mentioned three types of the winding of the sheet materials, A, B and C, Fig. 1 shows a process of forming a tire casing in the type A.

A device for forming a tire casing includes a shape-forming drum 1 and a pressing roller 2. The forming of the tire casing is as follows: an assembled body of a bead core 6 and a bead filler 7 are made to stand by on both outer sides in the axis direction of the shape-forming drum 1. First, an inner liner 3 is wound on the outer periphery of the shape-forming drum 1 while being pressed by the pressing roller 2. Then, a carcass layer 4, to which a left and right pair of narrow adhesion sheets 5, 5 is applied beforehand on both inner end portions, is wound while being similarly pressed by the pressing roller 2.

The forming device used in the present invention is provided with belt-like grooves 8, 8 in the circumference direction of the shape-forming drum 1 along the circumference direction of the drum at positions corresponding to the positions where the above adhesion sheets 5 are wound. Consequently, when the carcass layer 4 is wound on the shape-forming drum 1 while being pressed by the pressing roller 2, the adhesion sheets 5 which are applied to the inner surface of the carcass layer 4 are fitted into the belt-like grooves 8. Level differences attributed to the adhesion sheets 5 are thus eliminated from the surface of the shape-forming drum 1. Therefore, the inner liner 3 and the carcass layer 4 are closely adhered to each other, thus removing air in a region G sandwiched by the adhesion sheets 5, 5 between both of the sheets. As a result, air will not be trapped.

As the pressing roller 2, it may be a straight-shaped roller with a flat and smooth surface shown in Fig. 8. However, as exemplified in Fig. 1, if used is a roller which is configured such that many hollow wheels 9 are loosely fitted in parallel to a supporting shaft 10 and each hollow wheel 9 is independently displaceable in the radius direction, the above-described preventative effect on trapped air can be further enhanced.

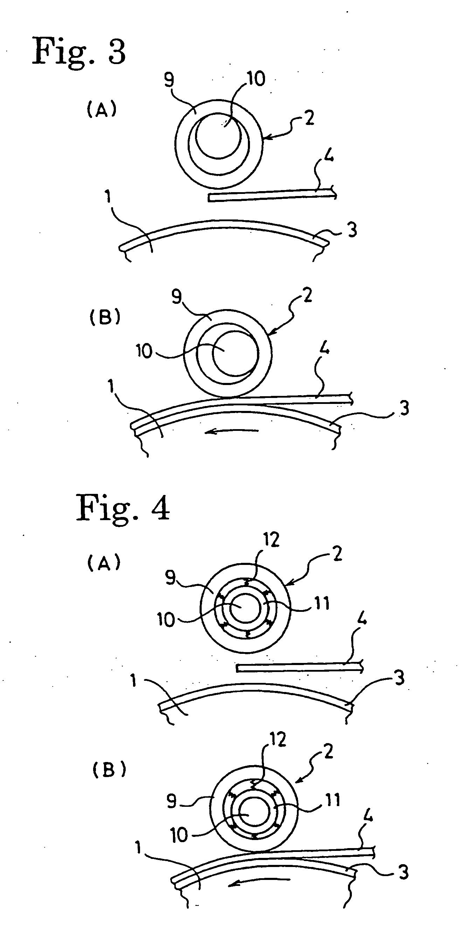

The pressing roller 2 shown in Fig. 1 is configured in a manner that the hollow wheels 9 made of steel having heavy bob action are loosely fitted to the supporting shaft 10 as shown in Figs. 3A and 3B. When not pressing the sheet material, the hollow wheels 9 are in a state of being suspended in the air by the supporting shaft 10 as shown in Fig. 3A. However, when pressing the sheet material, as shown in Fig. 3B, the hollow wheels 9 are ridden onto the sheet material away from the support of the supporting shaft 10, thus pressing the sheet material by use of their own weight. In addition, since the many hollow wheels 9 perform the foregoing action independently of each other, even if the sheet material wound on the shape-forming drum 1 is uneven, an independent press is given in response to each uneven spot to remove air between the sheet materials. As a result, a preventative action on trapped air can be performed with high precision.

In this manner, the pressing roller 2 composed of the many hollow wheels 9 can have a structure shown in Figs. 4A and 4B. The pressing rollers 2 of Figs. 4A and 4B are configured such that the many hollow wheels 9 are elastically supported respectively against a bearing 11 into which the supporting shaft 10 is fitted to be freely rotatable through springs 12 at a plurality of positions. When this pressing roller 2 does not press the sheet material, the hollow wheels 9 are supported in a state of being on the same axis as the supporting shaft 10 as shown in Fig. 4A. However, when the pressing roller 12 presses the sheet material, the hollow wheels 9 press the sheet material by use of the pressing force of the supporting shaft 10 and the elasticity of the springs 12 as shown in Fig. 4B. Similarly to the pressing rollers in Figs. 3A and 3B, since the many hollow wheels 9 perform the actions independently of each other, the preventative actions can be performed respectively on the trapped air with high precision by eliminating the unevenness, even if the sheet material on the shape-forming drum 1 is uneven. Note that it is possible to obtain a similar effect even if resin foam such as polyurethane is disposed as the elastic body instead of the springs 12 to support the hollow wheels 9.

In a method of producing a pneumatic radial tire in the present invention, when a process of winding all the sheet materials is completed in the process of forming the tire casing in Fig. 1, as shown in Fig. 2, the diameter of the shape-forming drum 1 is expanded to make the outer diameter of the carcass layer 4 in the outermost periphery almost the same as the inner diameter of the bead core 6 which has been standing by on the sides. Then, the assembled body of the bead core 6 and the bead filler 7 is set to fit into positions corresponding to the positions of the adhesion sheets 5 as shown with arrows.

Next, the cylinder-shaped tire casing in which the assembled body of the bead core 6 and the bead filler 7 have been set as described above is separated by reducing the diameter of the shape-forming drum 1, and is transferred to a shape-forming drum of a publicly-known second forming process. In this second forming process, both end portions of the carcass layer 4 are turned up to wrap the assembled body of the bead core 6 and the bead filler 7 in accordance with a publicly-known forming method. Furthermore, sidewall rubbers are wound respectively on both side parts. Then, an unvulcanized tire 70 shown in Fig. 7 is completed by expanding the diameter of the central portion of the tire casing and applying a belt layer and a tread rubber to its outer periphery. Note that the sidewall rubbers on both side parts may be wound in the former process of the first forming process instead of the second forming process as described above.

The unvulcanized tire 70 shown in Fig. 7 has the inner liner 3 in the innermost layer, and the end portions of the carcass layer 4, as well as the adhesion sheet 5, is turned up to wrap the assembled body of the bead core 6 and the bead filler 7. Reference numerals 71, 72 and 73 are the sidewall rubber, the belt layer and the tread rubber, respectively. The unvulcanized tire formed in this manner is set in a vulcanization mold to be vulcanized and formed. Thus, the finished tire can be obtained.

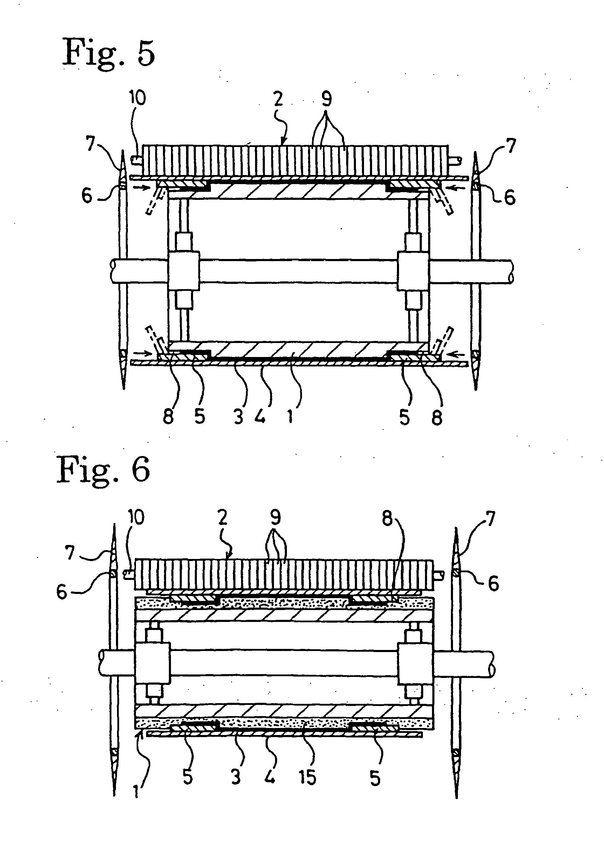

Fig. 5 shows another embodiment of a process of forming a tire casing in the present invention.

A shape-forming drum 1 used in this embodiment is formed in a manner that belt-like grooves 8 penetrate into the end portion of the drum. A carcass layer 4 and an adhesion sheet 5 are wound to protrude toward the side of the shape-forming drum 1. In this manner, the end portion of the carcass layer 4 and the adhesion sheets 5 protruded from the end portions of the shape-forming drum 1 are bent toward the inner diameter as shown with a dashed line, and an assembled body of a bead core 6 and a bead filler 7 is shifted in the directions indicated with arrows to be struck onto the surface of the protruding end portions which are bent. Next, the protruding end portions of the carcass layer 4 and the adhesion sheets 5 are tuned up to wrap the assembled body of the bead core 6 and the bead filler 7. Furthermore, a sidewall rubber is wound to complete the process of forming the tire casing.

After removed from the shape-forming drum, the tire casing formed in this manner is transferred to a publicly-known second process. Then, a belt layer, a tread rubber and the like are applied in accordance with a publicly-known forming method, and an unvulcanized tire is formed.

Fig. 6 shows still another embodiment of a process of forming a tire casing in the present invention.

An elastic layer 15 is provided for a shape-forming drum 1 used in this embodiment to coat the drum instead of the belt-like grooves 8 provided in the outer periphery of the drum in Fig. 1. The thickness of the elastic layer 15 is preferably set to be within a range from 0.5 to 5 times compared to the thickness of an adhesion sheet 5. It is sufficient for a pressing roller 2 to have the same configuration as that used in Fig. 1. Although the pressing roller 2 is preferable to be a roller in which many hollow wheels 9 are supported in parallel to a supporting shaft 10, a roller to have a flat and smooth surface may be used.

By using this forming device, when an inner liner 3, the left and right pair of narrow adhesion sheets 5, 5 and a carcass layer 4 are wound on the shape-forming drum 1 in a manner of the foregoing aspect A while being pressed by the pressing roller 2, the adhesion sheets 5 are squeezed into the elastic layer 15. Accordingly, the level differences of the adhesion sheets are eliminated from the surface of the shape-forming drum 1. Therefore, similarly to the case of Fig. 1, it is possible to prevent air from being included.

Any of the embodiments described respectively in Figs. 1, 2, 5 and 6 exemplified the case where sheet materials are wound on the shape-forming drum 1 in the winding type A. However, according to the present invention, it should be noted that a similar effect can be naturally obtained in the case where the winding is performed in the winding type B or C. Furthermore, the present invention has a remarkable effect when a resin film made of thermoplastic resin or a thermoplastic resin/elastomer composition is used especially as a sheet material of the inner liner.

### Examples 1 to 4

The common conditions were: the size of a tire was set to be 195/65R15; each sheet material of an inner liner, an adhesion sheet, and a carcass layer had the following specifications; and a device for forming a tire casing had the structure shown in Fig. 1. After the tire casings with different widths by depths of belt-like grooves provided on a shape-forming drum as described in table 1 were formed, one hundred pieces of each of four kinds of pneumatic radial tires were manufactured by a hundred (Examples 1 to 4).

In addition, the same sheet material as above was used to form the tire casings by use of a conventional forming device of Fig. 8. Then, an unvulcanized tire was formed for each of those tire casings to vulcanize and form, and a hundred pneumatic radial tires were manufactured with the same tire size as above (prior art).

Trapped air caused in the inner liners of the tires of above five kinds was examined with the following method. The number of faulty tires in which air was trapped was checked, and the result of table 1 was obtained.
Inner liner:
   film made of a polyamide resin/elastomer composition (thickness: 0.1 mm)
Adhesion sheet:
   rubber-covered sheet made of nylon fabric (width x thickness: 40 mm x 2 mm)
Carcass layer:
   rubber-covered sheet made of polyester carcass cords

### [Examination method for trapped air]

Used was a method to visually check projections which were trapped air in the inner liner to have developed into a state of projections on the surface of the inner liner owing to a thermal expansion after being vulcanized. When even a single projection of this kind is generated on the surface of the inner liner, the tire with the projection was counted as a faulty tire.

**Table 1**

| | PRIOR ART | EXAMPLE 1 | EXAMPLE 2 | EXAMPLE 3 | EXAMPLE 4 |
|---|---|---|---|---|---|
| BELT-LIKE GROOVE (WIDTH X DEPTH mm) | - - | 40 × 0.6 | 40 × 1.4 | 40 × 2.6 | 40 × 3.0 |
| NUMER OF FAULTY TIRES (PIECE) | 50 | 2 | 0 | 0 | 2 |

### Examples 5 and 6

Two kinds of pneumatic radial tires were manufactured by a hundred. The two kinds were: a case where an elastic layer coating a shape-forming drum of the device for forming the tire casing was made of polyurethane foam with a thickness of 2 mm (Example 5); and a case where an elastic layer coating a shape-forming drum of the device for forming the tire casing was made of polyurethane foam with a thickness of 10 mm (Example 6). In both cases, a difference was only in a point of replacing the devices of forming the tire casings in Figs. 1 to 4 with the device of forming the tire casing in Fig. 6.

It was checked whether or not there was trapped air caused in the inner liner of the above two kinds. The number of faulty tires which have caused air to be trapped was then checked. Accordingly, the result of table 2 was obtained.

**Table 2**

| | PRIOR ART | EXAMPLE 5 | EXAMPLE 6 |
|---|---|---|---|
| ELASTIC LAYER (THICKNESS mm) | - | 2 | 10 |
| NUMBER OF FAUTLY TIRES (PIECE) | 50 | 0 | 0 |

### Examples 7 and 8

Except a point that the pressing roller was replaced with a flat and smooth straight-shaped roll in the device for forming the tire casing in the second example, a hundred pneumatic radial tires were manufactured on the same condition as the second example (Example 7).

Moreover, except a point that the pressing roller was replaced with a flat and smooth straight-shaped roll in the device for forming the tire casing of the Example 5, a hundred pneumatic radial tires were manufactured on the same condition as the fifth example (Example 8).

It was checked whether or not there was trapped air caused in the inner liner of the above two kinds. The number of faulty tires which have caused air to be trapped was then checked. Accordingly, the result of table 3 was obtained.

**Table 3**

| | PRIOR ART | EXAMPLE 7 | EXAMPLE 8 |
|---|---|---|---|
| NUMBER OF FAULTY TIRES (PIECE) | 50 | 0 | 0 |

## Claims

1. A method of producing a pneumatic radial tire, which includes a method of forming a tire casing in which at least an inner liner (3), a left and right pair of narrow adhesion sheets (5, 5) and a carcass layer (4) are wound on an outer periphery of a shape-forming drum (1) in a cylindrical shape sequentially from inside while being pressed by a pressing roller (2), and in which a bead core (6) and a bead filler (7) are set on both of the left and right end portions of the outermost periphery,
wherein a shape-forming drum (1) provided with belt-like grooves (8) in a circumferential direction at positions of the outer periphery of the drum (1) corresponding to positions of the adhesion sheets (5, 5) is used as the shape-forming drum (1), **characterized in that**
the pressing roller (2) is configured such that many hollow wheels (9) having weight bobs are loosely fitted in parallel on a supporting shaft (10) and are displaceable independently of each other in a diameter direction of the supporting shaft (10).

2. A method of producing a pneumatic radial tire, which includes a method of forming a tire casing in which at least an inner liner (3), a left and right pair of narrow adhesion sheets (5, 5) and a carcass layer (4) are wound on an outer periphery of a shape-forming drum (1) in a hollow-cylindrical shape sequentially from inside while being pressed by a pressing roller (2), and in which a bead core (6) and a bead filler (7) are set on both of the left and right end portions of the outermost periphery,
wherein a shape-forming drum (1) having an elastic layer coated on the outer periphery is used as the shape-forming drum (1), **characterized in that**
the pressing roller (2) is configured such that many hollow wheels (9) having weight bobs are loosely fitted in parallel on a supporting shaft (10) and are displaceable independently of each other in a diameter direction of the supporting shaft (10).

3. The method of producing the pneumatic radial tire according to claim 1 or 2, wherein a tie rubber layer is disposed between the carcass layer (4) and the adhesion sheets (5, 5).

4. The method of producing the pneumatic radial tire according to any one of claims 1 to 3, wherein the inner liner (3) is made of any one of thermoplastic resin and a thermoplastic resin/elastomer composition.

5. The method of producing the pneumatic radial tire according to any one of claims 2 to 4, wherein a thickness of the elastic layer is 0.5 to 5 times compared to a thickness of the adhesion sheet (5).

6. The method of producing the pneumatic radial tire according to any one of claims 1 to 5, wherein the pressing roller (2) is configured such that a bearing is fitted into many hollow wheels (9) which are loosely fitted in parallel in an axis direction to be supported on a supporting shaft (10) and are elastically supported with an elastic body interposed between the hollow wheel (9) and the bearing.

7. The method of producing the pneumatic radial tire according to any one of claims 1 to 6, wherein a width of the hollow wheel (9) in an axis direction is set to be 5 to 10 mm.

## Patentansprüche

1. Verfahren zur Herstellung eines pneumatischen Gürteilreifens, das ein Verfahren zur Ausbildung einer Reifenummantelung enthält, in dem wenigstens ein innerer Mantel (3), ein linkes und rechtes Paar von schmalen Haftvermittlerlagen (5, 5) und eine Karkassenschicht (4) auf einen äußeren Umfang einer Formgebungstrommel (1) in einer zylindrischen Gestalt sequentielle von innen gewickelt wird, wobei diese mittels einer Presswalze (2) gepresst wird, und in dem ein Wulstrandkern (6) und ein Wulstrandfüller (7) sowohl auf dem linken als auch auf dem rechten Endabschnitt des äußersten Umfangs festgelegt werden,
bei dem eine Formgebungstrommel (1), die mit bandähnlichen Nuten (8) in einer Umfangsrichtung an Positionen des äußeren Umfangs der Trommel (1) entsprechend den Positionen der Haftvermittlerlagen (5, 5) vorgesehen ist, als die Formgebungstrommel (1) verwendet wird, **dadurch gekennzeichnet, dass**
die Presswalze (2) so aufgebaut ist, dass viele Hohlräder (9), die Gewichtelemente aufweisen, lose auf einer Unterstützungswelle (10) parallel angepasst sind und unabhängig voneinander in einer Durchmesserrichtung der Unterstützungswelle (10) verschiebbar sind.

2. Verfahren zur Herstellung eines pneumatischen Gürtelreifens, das ein Verfahren zur Ausbildung einer Reifenummantelung enthält, in dem wenigstens ein innerer Mantel (3), ein linkes und rechtes Paar von schmalen Haftvermittlerlagen (5, 5) und eine Karkassenschicht (4) auf einem äußeren Umfang einer Formgebungstrommel (1) in einer hohlzylindrischen Gestalt sequentiell von innen gewickelt wird, wobei diese mittels einer Presswalze (2) gepresst wird, und in dem ein Wulstrandkern (6) und ein Wulstrandfüller (7) sowohl auf dem linken als auch auf dem rechten Endabschnitt des äußersten Umfangs festgelegt werden,
bei dem eine Formgebungstrommel (1), die eine elastische Schicht aufweist, die auf den äußeren Umfang geschichtet ist, als die Formgebungstrommel (1) verwendet wird, **dadurch gekennzeichnet, dass**
die Presswalze (2) so aufgebaut ist, dass viele Hohlräder (9), die Gewichtselemente aufweisen, lose auf einer Unterstützungswelle (10) parallel angepasst sind, und unabhängig voneinander in einer Durchmesserrichtung der Unterstützungswelle (10) verschiebbar sind.

3. Verfahren zur Herstellung eines pneumatischen Gürtelreifens nach Anspruch 1 oder 2, bei dem eine Bindungsgummischicht zwischen der Karkassenschicht (4) und den Haftvermittlerlagen (5, 5) angeordnet ist.

4. Verfahren zur Herstellung des pneumatischen Gürtelreifens nach einem der Ansprüche 1 bis 3, bei dem der innere Mantel (3) aus thermoplastischem Harz oder einer thermoplastischen Harz-/Elastomerzusammensetzung gefertigt ist.

5. Verfahren zur Herstellung des pneumatischen Gürtelreifens nach einem der Ansprüche 2 bis 4, bei dem die Dicke der elastischen Schicht das 0,5- bis 5-fache, verglichen mit einer Dicke der Haftvermittlerlage (5), beträgt.

6. Verfahren zur Herstellung des pneumatischen Gürtelreifens nach einem der Ansprüche 1 bis 5, bei dem die Presswalze (2) so aufgebaut ist, dass ein Lager in viele Hohlräder (9) eingepasst ist, die lose parallel in einer axialen Richtung angepasst sind, um auf einer Unterstützungswelle (10) unterstützt zu sein, und elastisch mit einem elastischen Körper unterstützt sind, der zwischen dem Hohlrad (9) und dem Lager angeordnet ist.

7. Verfahren zur Herstellung des pneumatischen Gürtelreifens nach einem der Ansprüche 1 bis 6, bei dem eine Breite des Hohlrads (9) in einer axialen Richtung auf 5 bis 10 mm festgelegt ist.

## Revendications

1. Procédé de production d'un pneumatique radial, qui comprend un procédé consistant à former une enveloppe de pneumatique dans laquelle au moins une ceinture intérieure (3), une paire de feuilles d'adhésion étroites gauche et droite (5, 5) et une couche de carcasse (4) sont enroulées sur une périphérie extérieure d'un tambour de configuration (1) selon une forme cylindrique séquentiellement depuis l'intérieur tout en étant pressé par un rouleau de pression (2), et dans lequel une tringle (6) et un bourrage sur tringle (7) sont placés sur les deux portions d'extrémité gauche et droite de la périphérie extérieure ;
où le tambour de configuration (1) muni de rainures (8) semblable à une ceinture dans une direction circonférentielle à des positions de la périphérie extérieure du tambour (1) correspondant aux positions des feuilles d'adhésion (5, 5) est utilisé comme tambour de configuration (1), **caractérisé en ce que,**
le rouleau de pression (2) est configuré de telle sorte que beaucoup de roues creuses (9) ayant des plombs de poids sont lâchement montées en parallèle sur un arbre de support (10) et sont déplaçables indépendamment les unes des autres dans une direction diamétrale de l'arbre de support (10).

2. Procédé de production d'un pneumatique radial, qui comprend un procédé consistant à former une enveloppe de pneu, où au moins une ceinture intérieure (3), une paire de feuilles d'adhésion étroites gauche et droite (5, 5) et une couche de carcasse (4) sont enroulées sur une périphérie extérieure d'un tambour de configuration (1) d'une forme cylindrique creuse séquentiellement depuis l'intérieur tout en étant pressées par un rouleau de pression (2) et dans lequel une tringle (6) et un bourrage sur tringle (7) sont placés sur les deux battons d'extrémités gauche et droite de la périphérie extérieure,
où un tambour de configuration (1) ayant une couche élastique appliquée à la périphérie extérieure est utilisée comme tambour de configuration (1), **caractérisé en ce que**
le rouleau de pression (2) est configuré de telle sorte que beaucoup de roues creuses (9) ayant des plombs de poids soient lâchement montées en parallèle sur un arbre de support (10) et soient déplaçables indépendamment les unes des autres dans une direction diamétrale de l'arbre de support (10).

3. Procédé de fabrication d'un pneumatique radial, selon la revendication 1 ou 2, où une couche de connexion en caoutchouc est disposée entre la couche de carcasse (4) et les feuilles d'adhésion (5, 5).

4. Procédé de production d'un pneumatique radial, selon l'une des revendications 1 à 3, où la ceinture intérieure (3) est réalisée à partir de l'une quelconque parmi une résine thermoplastique et une composition de résine thermoplastique/élastomère.

5. Procédé de fabrication d'un pneumatique radial, selon l'une quelconque des revendications 2 à 4, où une épaisseur de la couche élastique représente 0,5 à 5 fois en comparaison avec une épaisseur de la feuille d'adhésion (5).

6. Procédé de production d'un pneumatique radial, selon l'une des revendications 1 à 5, où le rouleau de pression (2) est configuré de telle sorte qu'un palier est inséré dans beaucoup de roues creuses (9) qui sont montées lâchement en parallèle dans une direction axiale pour être supportées sur un arbre de support (10) et sont supportées élastiquement avec un corps élastique interposé entre la roue creuse (9) et le palier.

7. Procédé de production d'un pneumatique radial, selon l'une des revendications 1 à 6, où une largeur de la roue creuse (9) dans une direction d'axe est réglée pour qu'elle soit de 5 à 10 mm.
